# EUROPEAN PATENT SPECIFICATION

(11) **EP 3 594 580 B1**
(45) Date of publication and mention of the grant of the patent: **27.10.2021**
(21) Application number: 18781221.9
(22) Date of filing: 20.03.2018
(51) Int. Cl.: F24F 11/56, F24F 11/64, F24F 130/00, F24F 11/49, F24F 11/52

(54) **AIR CONDITIONER MANAGEMENT SYSTEM**
SYSTEM, ZUR REGELUNG EINER KLIMAANLAGE
SYSTÈME DE GESTION DE CONDITIONNEUR D'AIR

(30) Priority: 07.04.2017 JP 2017076487
(43) Date of publication of application: 15.01.2020
(73) Proprietor: Daikin Industries, Ltd., Osaka-shi, Osaka 530-8323 (JP)
(72) Inventor: KITADE, Yukio, Osaka-shi Osaka 530-8323 (JP); KAWAKAMI, Nobuyoshi, Osaka-shi Osaka 530-8323 (JP); KASAGAWA, Arina, Osaka-shi Osaka 530-8323 (JP); SAITOU, Masashi, Osaka-shi Osaka 530-8323 (JP)
(74) Representative: Global IP Europe Patentanwaltskanzlei
(86) International application number: PCT/JP2018/011202
(87) International publication number: WO 2018/186174

(56) References cited:
- WO-A1-2006/082942
- CN-A- 104 883 379
- JP-A- 2004 028 387
- JP-A- 2006 350 610
- JP-A- 2017 227 417
- US-A1- 2015 292 763

## Description

### TECHNICAL FIELD

The present invention relates to an air conditioner management system used for maintenance on an air conditioner.

### BACKGROUND ART

Conventionally-used air conditioners make it easy to provide safety measures against deterioration with age, which is caused by long-term use. For example, the air conditioner disclosed in Patent Literature 1 (JP 2013-83437 A) measures an elapsed time from when the first operation has been started, and automatically notifies a user or maintenance worker if the elapsed time exceeds predetermined standard operation hours. After receiving this notification, the user and the maintenance worker of the air conditioner perform maintenance on the air conditioner. The maintenance on the air conditioner is, for example, replacement of metal parts of the air conditioner. In particular, metal parts exposed to the outdoor air, such as an outdoor refrigerant pipe and an outdoor heat exchanger, tend to be corroded by long-term use of the air conditioner and cause refrigerant leakage.

US 2015/292763 A1 discloses an air conditioner management system comprising a first acquisition unit configured to acquire air conditioner installation region information about a region where an air conditioner is installed.

### SUMMARY OF THE INVENTION

### <Technical Problem>

Depending on the region where the air conditioner is installed, however, the metal parts exposed to the outdoor air may be corroded quickly. This case requires special maintenance of replacing metal parts more frequently than usual. Examples of the region requiring such special maintenance include coastal areas, remote islands, hot spring areas, and factory areas. In coastal areas and remote islands, salt contained in seawater and sea breeze tends to corrode metal parts. In hot spring areas, chemical components such as hydrogen sulfide contained in hot springs tend to corrode metal parts. In factory areas, chemical components such as sulfur dioxide gas contained in smoke emitted from a factory tend to corrode metal parts. In these regions, therefore, it is preferable for the user and the maintenance worker of the air conditioner to properly understand the timing at which the metal parts exposed to the outdoor air need to be replaced, in order to prevent refrigerant leakage due to corrosion of the metal parts.

An object of the present invention is to provide an air conditioner management system that enables timely maintenance on an air conditioner installed in a region requiring predetermined maintenance.

### <Solution to Problem>

An air conditioner management system according to a first aspect of the present invention includes a first storage unit, a first acquisition unit, and a determination unit. The first storage unit stores maintenance region information about a region requiring predetermined maintenance on an air conditioner. Here, the maintenance region information is information about a predetermined region where, if an air conditioner is installed therein, the air conditioner requires predetermined periodic replacement of metal parts thereof. The first acquisition unit is configured to acquire air conditioner installation region information about a region where the air conditioner is installed. The determination unit is configured to determine whether the air conditioner is installed in the region requiring the predetermined maintenance, based on the maintenance region information stored in the first storage unit and the air conditioner installation region information acquired by the first acquisition unit.

The air conditioner management system according to the first aspect can determine whether the air conditioner is installed in the region requiring the predetermined maintenance on the air conditioner, such as a region where metal parts of the air conditioner are corroded quickly. Therefore, for example, a maintenance worker of the air conditioner can perform maintenance such as replacement of the metal parts timely, based on a determination result of the air conditioner management system.

Moreover, the air conditioner management system according to the first aspect further includes a second storage unit and a presentation unit. The second storage unit stores maintenance information about the predetermined maintenance. The presentation unit presents the maintenance information stored in the second storage unit based on a determination result of the determination unit. Here, the presentation unit is configured to, when the air conditioner is installed in the predetermined region, present the maintenance information stored in the second storage unit to a maintenance worker of the air conditioner.

The air conditioner management system according to the first aspect presents the maintenance information about the maintenance on the air conditioner to, for example, the maintenance worker of the air conditioner based on the determination result. With the air conditioner management system, the maintenance worker of the air conditioner, for example, can appropriately perform the maintenance on the air conditioner in accordance with the presented maintenance information.

In an air conditioner management system according to a second aspect of the present invention is the air conditioner management system according to the first aspect, the maintenance information includes years of a replacement cycle for the metal parts.

An air conditioner management system according to a third aspect of the present invention is the air conditioner management system according to the first or second aspect, further including a selection unit. The second storage unit stores a plurality of pieces of the maintenance information. The selection unit is configured to select at least one piece of the maintenance information from among the plurality of pieces of maintenance information stored in the second storage unit, based on the air conditioner installation region information acquired by the first acquisition unit. The presentation unit is configured to present the maintenance information selected by the selection unit.

The air conditioner management system according to the third aspect selects the maintenance information suitable for the air conditioner from among the plurality of pieces of maintenance information in accordance with the region where the air conditioner is installed, and presents the selected maintenance information to, for example, the maintenance worker of the air conditioner. With the air conditioner management system, the maintenance worker of the air conditioner, for example, can perform the maintenance suitable for the region where the air conditioner is installed.

An air conditioner management system according to a fourth aspect of the present invention is the air conditioner management system according to the third aspect, further including a third storage unit. The third storage unit stores air conditioner specification information about specifications of the air conditioner. The selection unit is configured to select the maintenance information further based on the air conditioner specification information stored in the third storage unit.

The air conditioner management system according to the fourth aspect selects the maintenance information suitable for the air conditioner from among the plurality of pieces of maintenance information in accordance with the specifications of the air conditioner, and presents the selected maintenance information to, for example, the maintenance worker of the air conditioner. Examples of the specifications of the air conditioner include materials and dimensions of a heat exchanger and a refrigerant pipe. With the air conditioner management system, the maintenance worker of the air conditioner, for example, can perform the maintenance suitable for the specifications of the air conditioner.

An air conditioner management system according to a fifth aspect of the present invention is the air conditioner management system according to the third or fourth aspect, further including a second acquisition unit. The second acquisition unit is configured to acquire at least one of installation hours and operation hours of the air conditioner. The selection unit is configured to select the maintenance information further based on at least one of the installation hours and the operation hours acquired by the second acquisition unit.

The air conditioner management system according to the fifth aspect selects the maintenance information suitable for the air conditioner from among the plurality of pieces of maintenance information in accordance with at least one of the installation hours and the operation hours of the air conditioner, and presents the selected maintenance information to, for example, the maintenance worker of the air conditioner. The installation hours of the air conditioner is, for example, an elapsed time from when the air conditioner has been installed. The operation hours of the air conditioner is, for example, total operation hours of the air conditioner. With the air conditioner management system, the maintenance worker of the air conditioner, for example, can perform the maintenance suitable for at least one of the installation hours and the operation hours of the air conditioner.

An air conditioner management system according to a sixth aspect of the present invention is the air conditioner management system according to any one of the first to fifth aspects, wherein the air conditioner includes a notification unit that is configured to provide notification of the maintenance information. The presentation unit is configured to transmit the maintenance information to the notification unit.

The air conditioner management system according to the sixth aspect can automatically notify, for example, the user and the maintenance worker of the air conditioner of the information about the maintenance on the air conditioner.

An air conditioner management system according to a seventh aspect of the present invention is the air conditioner management system according to any one of the first to sixth aspects, further comprising the air conditioner and an air conditioner management apparatus, wherein the air conditioner is connected to the air conditioner management apparatus via a network. The air conditioner management apparatus includes at least one of the first storage unit, the first acquisition unit, and the determination unit.

The air conditioner management system according to the seventh aspect includes the air conditioner management apparatus that remotely manages the air conditioner via the network. With the air conditioner management system, the maintenance worker of the air conditioner, for example, can efficiently perform the maintenance on a plurality of air conditioners using the air conditioner management apparatus.

An air conditioner management system according to an eighth aspect of the present invention is the air conditioner management system according to any one of the first to sixth aspects further comprising the air conditioner, wherein the air conditioner includes the first storage unit, the first acquisition unit, and the determination unit.

The air conditioner management system according to the eighth aspect is incorporated in the air conditioner to be managed. With the air conditioner management system, the maintenance worker of the air conditioner, for example, can perform the maintenance on the air conditioner without involving a network, using, for example, a controller of the air conditioner.

### <Advantageous Effects of Invention>

The air conditioner management system according to the first aspect of the present invention can determine whether the air conditioner is installed in the region requiring the predetermined maintenance on the air conditioner.

With the air conditioner management system according to the second aspect of the present invention, the maintenance worker of the air conditioner, for example, can appropriately perform the maintenance on the air conditioner in accordance with the presented maintenance information.

With the air conditioner management system according to the third aspect of the present invention, the maintenance worker of the air conditioner, for example, can perform the maintenance suitable for the region where the air conditioner is installed.

With the air conditioner management system according to the fourth aspect of the present invention, the maintenance worker of the air conditioner, for example, can perform the maintenance suitable for the specifications of the air conditioner.

With the air conditioner management system according to the fifth aspect of the present invention, the maintenance worker of the air conditioner, for example, can perform the maintenance suitable for at least one of the installation hours and the operation hours of the air conditioner.

The air conditioner management system according to the sixth aspect of the present invention can automatically notify, for example, the user and the maintenance worker of the air conditioner of the information about the maintenance on the air conditioner.

With the air conditioner management system according to the seventh aspect of the present invention, the maintenance worker of the air conditioner, for example, can efficiently perform the maintenance on a plurality of air conditioners using the air conditioner management apparatus.

With the air conditioner management system according to the eighth aspect of the present invention, the maintenance worker of the air conditioner, for example, can perform the maintenance on the air conditioner without involving a network, using, for example, a controller of the air conditioner.

### BRIEF DESCRIPTION OF THE DRAWINGS

FIG. 1 is a diagram illustrating an overall configuration of an air conditioner management system 100 according to an embodiment.
FIG. 2 is a diagram illustrating a detailed configuration of a property 1a.
FIG. 3 is a block diagram illustrating detailed configurations of an outdoor unit 51 and an indoor unit 52.
FIG. 4 is a block diagram illustrating a configuration of a local controller 10a.
FIG. 5 is a block diagram illustrating a configuration of a remote controller 20.
FIG. 6 is an example of a maintenance region information database 23a.
FIG. 7 is an example of a maintenance information database 23b.
FIG. 8 is a flowchart illustrating an operation of the air conditioner management system 100.
FIG. 9 is an example of an air conditioner specification information database 23c of Modification A.
FIG. 10 is a block diagram illustrating a configuration of a local controller 10a of Modification B.
FIG. 11 is an example of an air conditioner specification information database 123c of Modification J.

### DESCRIPTION OF EMBODIMENTS

An air conditioner management system 100 according to an embodiment of the present invention will be described with reference to the drawings.

### (1) Overall Configuration

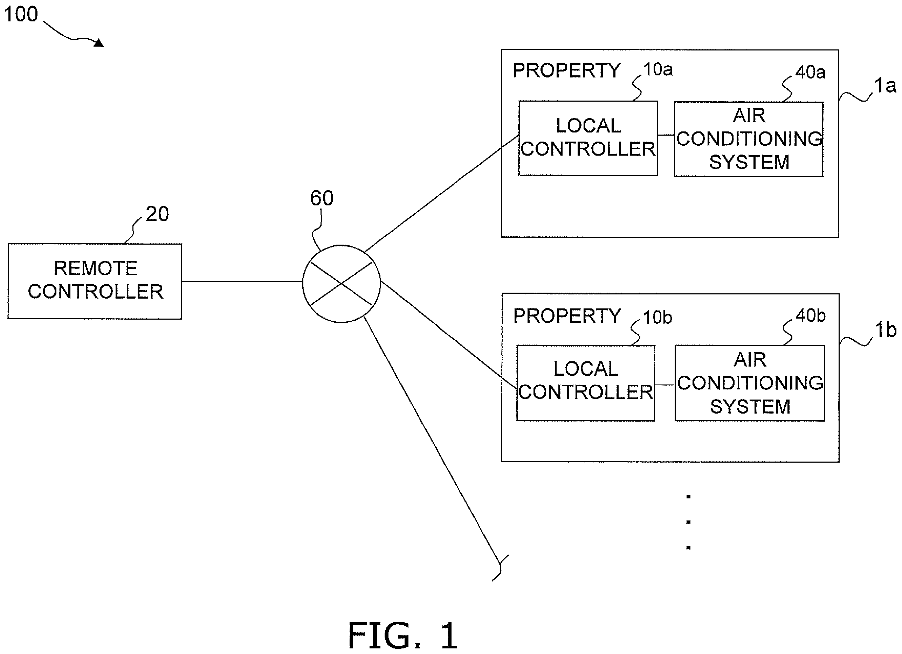

FIG. 1 is a diagram illustrating an overall configuration of the air conditioner management system 100. The air conditioner management system 100 manages a plurality of air conditioners 50 installed in each of a plurality of properties 1a, 1b,....

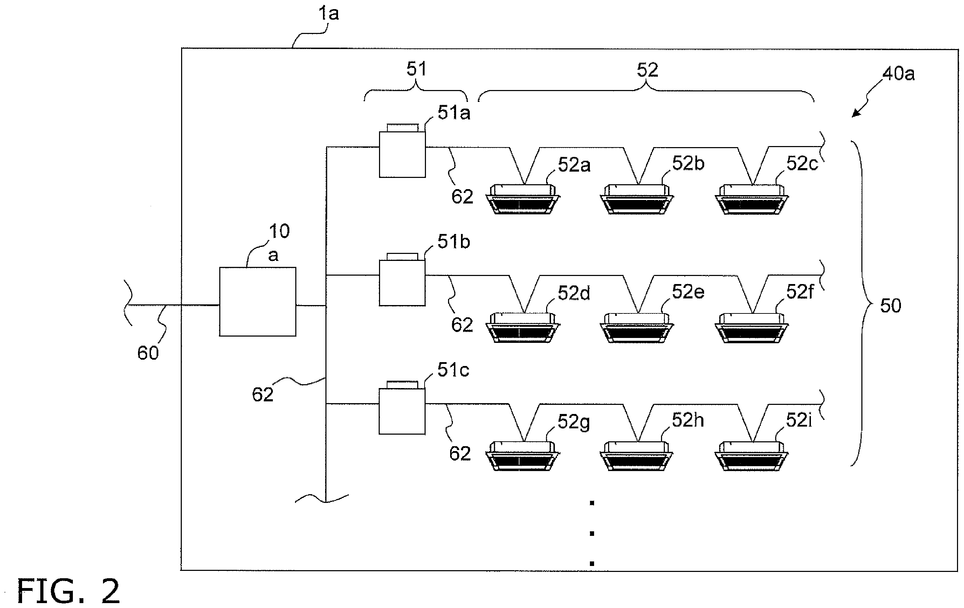

The properties 1a, 1b,... exist in various regions. Local controllers 10a, 10b,... and air conditioning systems 40a, 40b,... are mainly installed in the properties 1a, 1b,... , respectively. The local controllers 10a, 10b,... respectively manage the air conditioning systems 40a, 40b,... in the properties la, 1b,... in which the respective local controllers 10a, 10b,... are installed. The air conditioning systems 40a, 40b,... each include a plurality of air conditioners 50 (see FIG. 2). The local controllers 10a, 10b,... in the respective properties 1a, 1b,... are connected to a remote controller 20 via a communication network 60 such as the Internet.

FIG. 2 is a diagram illustrating a detailed configuration of the property 1a. The other properties 1b,... also have a similar configuration to the property 1a. As illustrated in FIG. 2, the local controller 10a and the plurality of air conditioners 50 are installed in the property 1a. The local controller 10a is connected to the plurality of air conditioners 50 by an air conditioner-dedicated communication line 62.

The air conditioner 50 mainly includes outdoor units 51a, 51b, 51c,... (hereinafter collectively referred to as the "outdoor units 51"), and indoor units 52a, 52b, 52c, 52d, 52e, 52f, 52g, 52h, 52i,... (hereinafter collectively referred to as the "indoor units 52"). The local controller 10a is connected to each of the outdoor units 51 by the air conditioner-dedicated communication line 62. Each of the outdoor units 51 is connected to the plurality of indoor units 52 by the air conditioner-dedicated communication line 62.

### (2) Detailed Configuration

### (2-1) Configuration of Air Conditioner

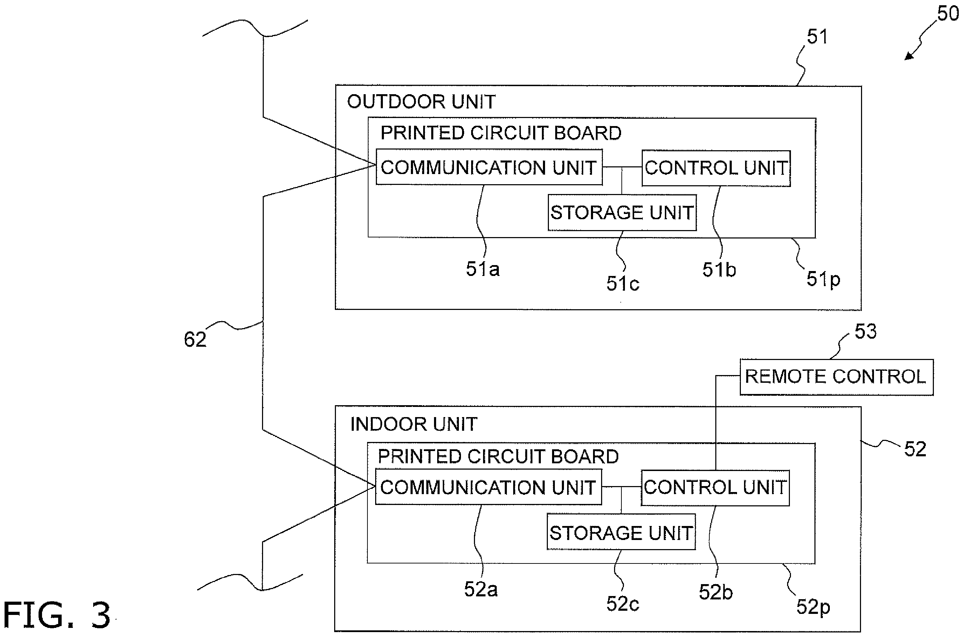

The air conditioner 50 mainly includes the outdoor unit 51 and the indoor unit 52. FIG. 3 is a block diagram illustrating detailed configurations of the outdoor unit 51 and the indoor unit 52.

The outdoor unit 51 includes, for example, a compressor, a heat exchanger, an expansion mechanism, and a fan. The outdoor unit 51 is installed outdoors in the property 1a. The indoor unit 52 includes, for example, a heat exchanger and a fan. The indoor unit 52 is installed in a room inside the property 1a. The outdoor unit 51 and the indoor unit 52 are connected by a refrigerant pipe to constitute a refrigerant circuit. Various sensors are attached to the outdoor unit 51 and the indoor unit 52. For example, a room temperature sensor is attached to the indoor unit 52. The room temperature sensor detects the temperature of the room in which the indoor unit 52 is installed. For example, an outdoor air temperature sensor, a discharge temperature sensor, a discharge pressure sensor, and a suction pressure sensor are attached to the outdoor unit 51. The outdoor air temperature sensor detects the temperature of outdoor air. The discharge temperature sensor detects a discharge temperature that is the temperature of refrigerant flowing through a discharge pipe of the compressor. The discharge pressure sensor detects a discharge pressure that is the pressure of the refrigerant flowing through the discharge pipe of the compressor. The suction pressure sensor detects a suction pressure that is the pressure of the refrigerant flowing through a suction pipe of the compressor.

A user and a maintenance worker of the air conditioner 50 can control the air conditioner 50 by operating a remote control 53 attached to the air conditioner 50. The remote control 53 can communicate with the indoor unit 52 through near field communication.

The outdoor unit 51 and the indoor unit 52 include printed circuit boards 51p and 52p, respectively. Electronic components constituting an electronic circuit are fixed to the printed circuit boards 51p and 52p. The printed circuit boards 51p and 52p are wired such that the electronic components are electrically connected to each other. Examples of the electronic component include an integrated circuit, a resistor, a capacitor, and a transistor. The printed circuit boards 51p and 52p respectively include communication units 51a and 52a, control units 51b and 52b, and storage units 51c and 52c.

The communication units 51a and 52a are interfaces for the air conditioner-dedicated communication line 62. The communication units 51a and 52a transmit signals to the air conditioner-dedicated communication line 62 or receive signals from the air conditioner-dedicated communication line 62 in accordance with commands from the control units 51b and 52b, respectively.

The control units 51b and 52b control the operations of the outdoor unit 51 and the indoor unit 52, respectively, in accordance with a control command input by the maintenance worker of the air conditioner 50 via the local controller 10a, and in accordance with a control command input by the user and the maintenance worker of the air conditioner 50 via the remote control 53. Thus, the control units 51b and 52b control the operation of, for example, the compressor included in the refrigerant circuit.

The control unit 51b or 52b transmits data related to the outdoor unit 51 or the indoor unit 52 to the local controller 10a via the communication unit 51a or 52a, respectively. For example, the control units 51b and 52b transmit values, which are detected by various sensors at predetermined intervals (for example, one minute), to the local controller 10a as operation information. When a control command is input through the remote control 53, the control units 51b and 52b immediately transmit the input control command to the local controller 10a through the communication units 51a and 52a, respectively.

The storage units 51c and 52c are, for example, EEPROMs. The storage units 51c and 52c store, for example, serial numbers unique to the printed circuit boards 51p and 52p, product model codes, and model numbers of the outdoor unit 51 and the indoor unit 52, respectively.

### (2-2) Configuration of Local Controller

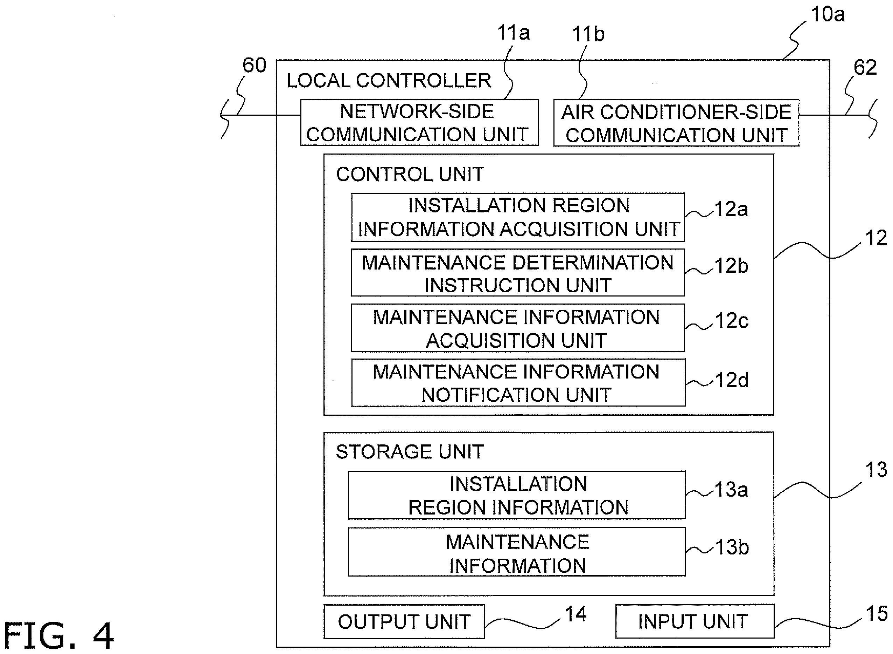

FIG. 4 is a block diagram illustrating a configuration of the local controller 10a. The other local controllers 10b,... have similar configurations.

The local controller 10a is a computer installed in, for example, a management room in the property 1a. The local controller 10a is the computer for managing the air conditioner 50 installed in the same property 1a. The local controller 10a detects an abnormality in the air conditioner 50, receives an input of an operation schedule of the air conditioner 50, and controls the operation of the air conditioner 50 in accordance with the operation schedule. The local controller 10a is connected to the wide area communication network 60 such as the Internet, and is connected to the remote controller 20 via the communication network 60. The local controller 10a is connected to each of the air conditioners 50 via the air conditioner-dedicated communication line 62 such as a LAN in the property 1a.

As illustrated in FIG. 4, the local controller 10a mainly includes a network-side communication unit 11a, an air conditioner-side communication unit 11b, a control unit 12, a storage unit 13, an output unit 14, and an input unit 15.

The network-side communication unit 11a is an interface for the communication network 60. The network-side communication unit 11a makes it possible to connect the local controller 10a to the communication network 60.

The air conditioner-side communication unit 11b is an interface for the air conditioner-dedicated communication line 62. The air conditioner-side communication unit 11b makes it possible to connect the local controller 10a to the air conditioner-dedicated communication line 62.

The control unit 12 mainly includes a CPU. The control unit 12 executes an installation region information acquisition unit 12a, a maintenance determination instruction unit 12b, a maintenance information acquisition unit 12c, and a maintenance information notification unit 12d, which are control programs for the local controller 10a. The operation of these programs will be described later.

The storage unit 13 mainly includes storage devices such as a RAM, an HDD, and an SSD. The storage unit 13 stores data used by the programs to be executed by the control unit 12. For example, the storage unit 13 stores installation region information 13a and maintenance information 13b. These pieces of information will be described later.

The output unit 14 and the input unit 15 are integrally configured as, for example, a display having a touch panel function and a speaker function. An input screen is displayed on the display. A button and the like for receiving an input of a control command to the air conditioner 50 are arranged on the input screen. When the maintenance worker of the air conditioner 50 touches the button displayed on the display, processing corresponding to the button is executed in the local controller 10a.

A GPS 16 is attached to the local controller 10a. The GPS 16 receives signals from GPS satellites to acquire the latitude and longitude of the current position of the GPS 16. Alternatively, the GPS 16 may be attached to, for example, the outdoor unit 51 and the indoor unit 52 of the air conditioner 50.

### (2-3) Configuration of Remote Controller

The remote controller 20 is connected to the local controllers 10a, 10b,... in the properties 1a, 1b,... , respectively, via the communication network 60. The remote controller 20 is actually a server built on the cloud. It is assumed below that the remote controller 20 includes one server. Alternatively, the remote controller 20 may be a computer group including a plurality of servers.

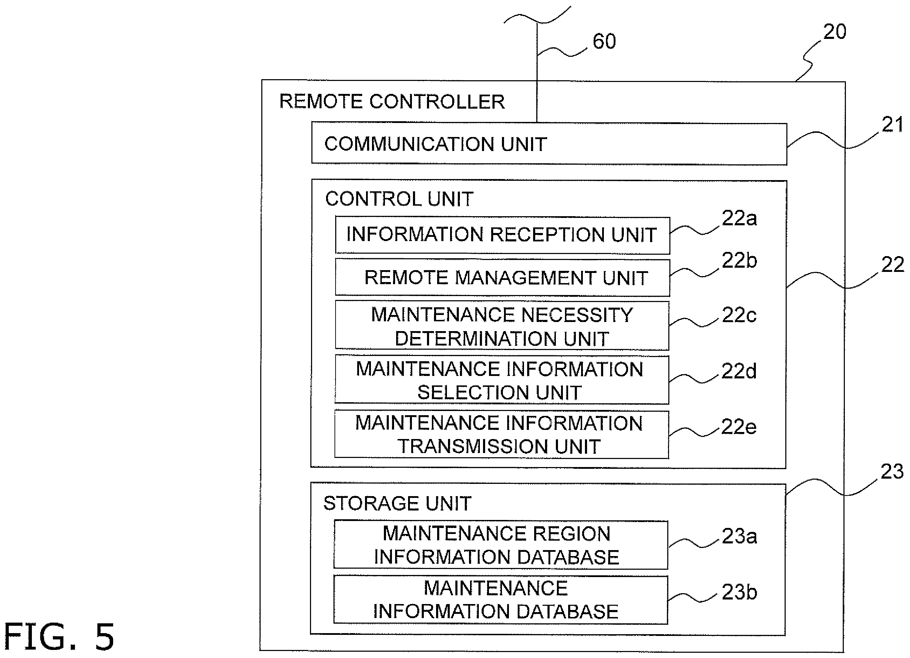

FIG. 5 is a block diagram illustrating the configuration of the remote controller 20. The remote controller 20 mainly includes a communication unit 21, a control unit 22, and a storage unit 23.

The communication unit 21 is an interface for the communication network 60. The communication unit 21 makes it possible to connect the remote controller 20 to the communication network 60.

The control unit 22 mainly includes a CPU. The control unit 22 executes an information reception unit 22a, a remote management unit 22b, a maintenance necessity determination unit 22c, a maintenance information selection unit 22d, and a maintenance information transmission unit 22e, which are control programs for the remote controller 20.

The information reception unit 22a receives, via the communication unit 21, information transmitted from the local controllers 10a, 10b,... and stores the information in the storage unit 23. Examples of the information received by the information reception unit 22a include air conditioner information, abnormality report data, and daily report data. The air conditioner information is information about the air conditioner 50, such as a model number, a model code, a model name, and an installation place. The abnormality report data is a collection of information about the abnormalities that have occurred in the air conditioner 50. The daily report data is a daily collection of operation information of the air conditioner 50.

The remote management unit 22b manages each of the air conditioners 50 based on, for example, the abnormality report data and the daily report data stored in the storage unit 23. For example, in a case where an abnormality of the air conditioner 50 is detected, the remote management unit 22b executes processing of specifying the air conditioner 50 having that abnormality and dispatching a service person to that air conditioner 50. For example, the remote management unit 22b provides the service person with notification by e-mail.

The operations of the maintenance necessity determination unit 22c, the maintenance information selection unit 22d, and the maintenance information transmission unit 22e will be described later.

The storage unit 23 mainly includes storage devices such as a RAM, an HDD, and an SSD. The storage unit 23 stores the air conditioner information, the abnormality report data, and the daily report data. The storage unit 23 also stores a maintenance region information database 23a and a maintenance information database 23b that will be described below.

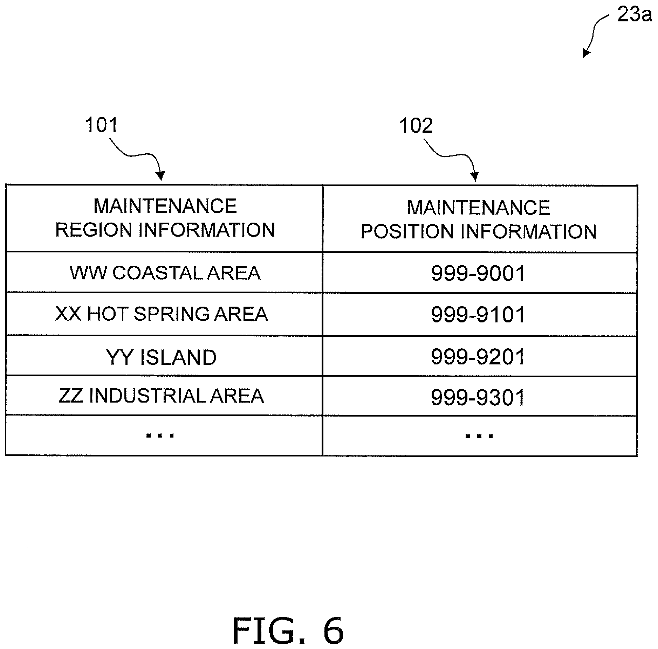

FIG. 6 is an example of the maintenance region information database 23a. The maintenance region information database 23a relates to a region requiring special maintenance on the air conditioner 50. The maintenance mentioned here is, for example, periodic replacement of metal parts of the air conditioner 50. In this case, specific examples of the metal parts to be periodically replaced include parts exposed to the outdoor air, such as a refrigerant pipe installed outdoors and a heat exchanger of the outdoor unit 51. These parts tend to cause refrigerant leakage by being gradually corroded through long-term use of the air conditioner 50 and due to various substances contained in the outdoor air. Depending on the region where the air conditioner 50 is installed, the metal parts to be replaced during maintenance tend to be corroded more quickly. In this case, the special maintenance mentioned above is required, that is, the metal parts need to be replaced more frequently than usual. Examples of the region requiring the special maintenance on the air conditioner 50 include coastal areas, remote islands, hot spring areas, and factory areas. In coastal areas and remote islands, salt contained in seawater and sea breeze tends to corrode metal parts exposed to the outdoor air. In hot spring areas, chemical components such as hydrogen sulfide contained in hot springs tend to corrode metal parts exposed to the outdoor air. In factory areas, chemical components such as sulfur dioxide gas contained in smoke emitted from a factory tend to corrode metal parts exposed to the outdoor air.

In the maintenance region information database 23a, maintenance region information 101 and maintenance position information 102 are associated with each other. The maintenance region information 101 indicates a region requiring the special maintenance. Specifically, the maintenance region information 101 is a character string uniquely identifying a region requiring the special maintenance. Examples of the character string include "WW coastal area", "XX hot spring area", "YY island", and "ZZ factory area". The maintenance position information 102 indicates a position where the corresponding maintenance region information 101 exists. Examples of the maintenance position information 102 include an address, a zip code, and a geographical range of the region indicated by the corresponding maintenance region information 101. The geographical range is, for example, the latitudes and longitudes of the north, south, east, and west endpoints of the region indicated by the corresponding maintenance region information 101. In the present embodiment, as illustrated in FIG. 6, the zip code of the region indicated by the corresponding maintenance region information 101 is stored as the maintenance position information 102. Depending on the maintenance region information 101, there may be a plurality of addresses and zip codes stored as the corresponding maintenance position information 102.

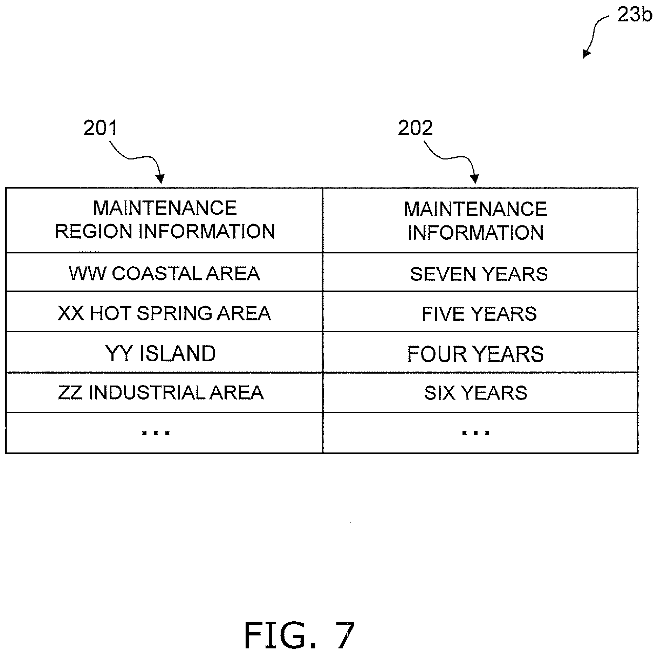

FIG. 7 is an example of the maintenance information database 23b. The maintenance information database 23b relates to the special maintenance on the air conditioner 50. In the maintenance information database 23b, maintenance region information 201 and maintenance information 202 are associated with each other. The maintenance region information 201 is the same data as the maintenance region information 101 in the maintenance region information database 23a. The maintenance information 202 is information about the special maintenance on the air conditioner 50 that is installed in the region indicated by the corresponding maintenance region information 201. Specific examples of the maintenance information 202 include the years of a replacement cycle for the metal parts of the air conditioner 50, and optimum materials of the metal parts of the air conditioner 50. In FIG. 7, the years of a replacement cycle for the metal parts of the air conditioner 50 are stored as the maintenance information 202. For example, in a case where the data stored in the maintenance information 202 indicates "five years", the metal parts of the air conditioner 50 installed in the region indicated by the maintenance region information 201 corresponding to the maintenance information 202 need to be replaced every five years by the special maintenance. In this case, the years of a replacement cycle for the metal parts is five years. As described above, the metal parts to be replaced by the special maintenance are metal parts that are exposed to the outdoor air and tend to be corroded. It is assumed that, regarding the air conditioner 50 installed in a region not requiring the special maintenance, the metal parts exposed to the outdoor air need to be replaced every ten years. All the maintenance information 202 illustrated in FIG. 7 relates to the air conditioners 50 installed in the regions requiring the special maintenance. Therefore, the maintenance information 202 stores numbers of years shorter than ten years.

The maintenance region information database 23a and the maintenance information database 23b are stored in the storage unit 23 of the remote controller 20 in advance, before the air conditioner management system 100 starts managing the air conditioner 50. That is, the maintenance worker of the air conditioner 50 prepares the maintenance region information database 23a and the maintenance information database 23b in advance, and stores the databases in the storage unit 23 of the remote controller 20.

### (3) Operation

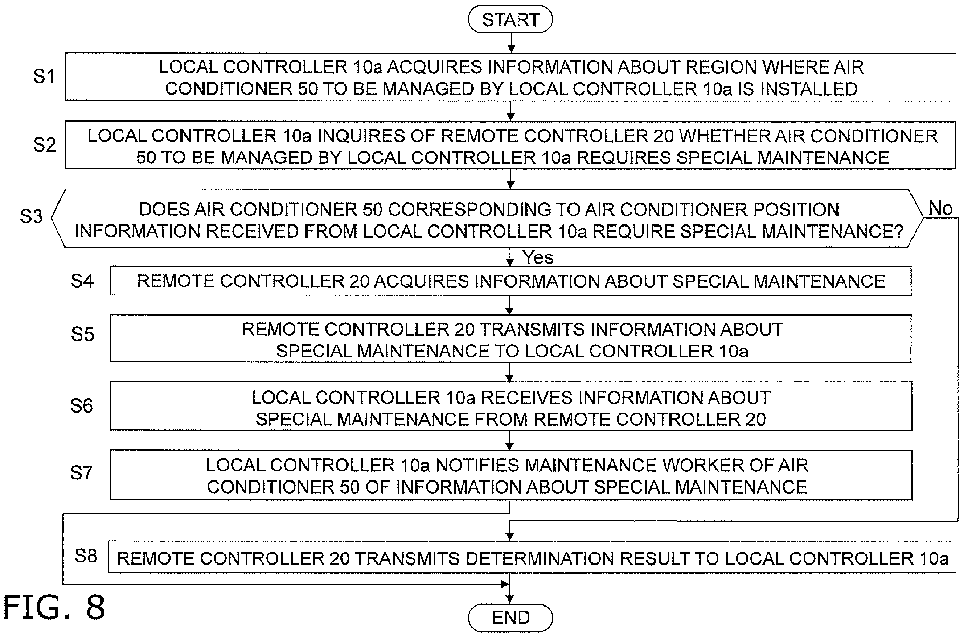

FIG. 8 is a flowchart illustrating an operation of the air conditioner management system 100. Next, processing, with which the air conditioner management system 100 presents information about maintenance on the air conditioner 50 installed in the region requiring the special maintenance to the maintenance worker of the air conditioner 50, will be described with reference to FIG. 8. It is assumed below that the air conditioner 50 is installed in the property 1a and managed by the local controller 10a.

First, the local controller 10a acquires information about the region where the air conditioner 50 to be managed by the local controller 10a is installed (step S1). Specifically, the installation region information acquisition unit 12a of the local controller 10a acquires, using the GPS 16, air conditioner position information about the position where the air conditioner 50 is installed. Examples of the air conditioner position information include latitude and longitude data, an address, and a zip code. The latitude and longitude data indicates the latitude and longitude received by the GPS 16. The address is obtained, for example, from the latitude and longitude data and map data. The zip code is obtained, for example, from the latitude and longitude data, the map data, and a zip code database. The map data and the zip code database are input by the maintenance worker of the air conditioner 50, or stored in advance in the storage unit 13 of the local controller 10a after being acquired by the control unit 12 via, for example, the Internet. It is assumed in the present embodiment that the zip codes of the properties 1a, 1b,... , in which the air conditioners 50 are installed, are used as the air conditioner position information.

Next, the local controller 10a inquires of the remote controller 20 whether the air conditioner 50 to be managed by the local controller 10a requires the special maintenance (step S2). Specifically, the maintenance determination instruction unit 12b of the local controller 10a requests the remote controller 20 to determine whether the air conditioner 50 requires the special maintenance. At this time, the maintenance determination instruction unit 12b transmits, to the remote controller 20, the air conditioner position information acquired by the installation region information acquisition unit 12a.

Next, in response to the request from the local controller 10a, the remote controller 20 determines whether the air conditioner 50 corresponding to the air conditioner position information received from the local controller 10a requires the special maintenance (step S3). Specifically, the maintenance necessity determination unit 22c of the remote controller 20 compares the maintenance region information database 23a stored in the storage unit 23 with the received air conditioner position information. In a case where the maintenance region information database 23a includes a record having the maintenance position information 102 in which the zip code as the received air conditioner position information is stored, the maintenance necessity determination unit 22c determines that the air conditioner 50 corresponding to the received air conditioner position information requires the special maintenance.

Next, in a case where the remote controller 20 determines that the air conditioner 50 corresponding to the air conditioner position information received from the local controller 10a requires the special maintenance, the remote controller 20 acquires information about the special maintenance (step S4). Specifically, the maintenance information selection unit 22d of the remote controller 20 refers to the maintenance region information database 23a and the maintenance information database 23b, and acquires the maintenance information 202 corresponding to the received air conditioner position information. For example, it is assumed that, in the maintenance region information database 23a illustrated in FIG. 6, the maintenance region information 101 corresponding to the received air conditioner position information is "XX hot spring area". In this case, in the maintenance information database 23b illustrated in FIG. 7, the maintenance information 202 corresponding to the maintenance region information 201 of "XX hot spring area" is "five years". Therefore, the maintenance information selection unit 22d acquires information about the special maintenance: "five years", as the information about the special maintenance on the air conditioner 50 corresponding to the received air conditioner position information. As described above, the maintenance information selection unit 22d selects one piece of the maintenance information 202 for the air conditioner 50 corresponding to the air conditioner position information received from the local controller 10a, from among a plurality of pieces of the maintenance information 202 stored in the maintenance information database 23b.

Next, the remote controller 20 transmits, to the local controller 10a, the information about the special maintenance (step S5). Specifically, the maintenance information transmission unit 22e of the remote controller 20 presents, for example, the information about the special maintenance to the maintenance worker of the air conditioner 50. More specifically, the maintenance information transmission unit 22e transmits, to the local controller 10a that has transmitted the received air conditioner position information, information indicating that the air conditioner 50 corresponding to the air conditioner position information requires the special maintenance and the information about the special maintenance. In the case of the above example, the information about the special maintenance is the data of "five years", which constitutes the maintenance information 202.

Next, the local controller 10a receives the information about the special maintenance from the remote controller 20 (step S6). Specifically, the maintenance information acquisition unit 12c of the local controller 10a receives the information indicating that the air conditioner 50 to be managed by the local controller 10a requires the special maintenance and the information about the special maintenance. In the case of the above example, the local controller 10a receives the information about the special maintenance. This information indicates that the metal parts of the air conditioner 50 to be managed by the local controller 10a, i.e., the metal parts that need to be periodically replaced because of the exposure to the outdoor air, need to be replaced every five years.

Next, the local controller 10a notifies the maintenance worker of the air conditioner 50 of the information about the special maintenance (step S7). Specifically, the maintenance information notification unit 12d of the local controller 10a receives, from the maintenance information transmission unit 22e of the remote controller 20, information indicating necessity of the special maintenance and the information about the special maintenance, and notifies the maintenance worker of the air conditioner 50 of these pieces of information. In the case of the above example, the maintenance worker is notified that the metal parts of the air conditioner 50 to be managed by the maintenance worker, i.e., the metal parts that need to be periodically replaced because of the exposure to the outdoor air, need to be replaced every five years. Therefore, the maintenance worker can perform the special maintenance on the air conditioner 50 based on the notification. For example, the maintenance information notification unit 12d may display predetermined information on the display that is the output unit 14 of the local controller 10a in order to notify the maintenance worker of the air conditioner 50 of the information about the special maintenance. Alternatively, the maintenance information notification unit 12d may display predetermined information on, for example, a liquid crystal display and an LED of the remote control 53 of the indoor unit 52, in order to notify the user of the air conditioner 50 of the information about the special maintenance. Alternatively, the maintenance information notification unit 12d may send the information about the special maintenance to a portable terminal of the user and the maintenance worker of the air conditioner 50 by, for example, e-mail. In this case, for example, the maintenance information notification unit 12d may send the information about the special maintenance in a way suitable for the user and the maintenance worker of the air conditioner 50.

In a case where the remote controller 20 determines that the air conditioner 50 corresponding to the air conditioner position information received from the local controller 10a does not require the special maintenance, the remote controller 20 transmits the determination result to the local controller 10a (step S8). As a result, the maintenance worker of the air conditioner 50 can manage the air conditioner 50 without performing the special maintenance.

The series of processing illustrated in FIG. 8, that is, the processing of determining whether the special maintenance is required and transmitting the determination result, is performed at a predetermined timing. For example, the processing illustrated in FIG. 8 may be executed when a predetermined time has elapsed from the installation time, which is the time when the air conditioner 50 has been installed in the property 1a. Alternatively, the processing illustrated in FIG. 8 may be constantly executed after the installation time. Alternatively, the processing illustrated in FIG. 8 may be periodically executed after the installation time. Alternatively, the processing illustrated in FIG. 8 may be executed in response to a request from, for example, the maintenance worker of the air conditioner 50. In this case, for example, the maintenance worker of the air conditioner 50 operates the local controller 10a to request the remote controller 20 to determine whether the special maintenance is required. Alternatively, the processing illustrated in FIG. 8 may be executed based not on the installation time but on the time when the air conditioner 50 installed in the property 1a has been turned on for the first time.

### (4) Characteristics

### (4-1)

The air conditioner management system 100 of the present embodiment determines whether the air conditioner 50 is installed in the region requiring the special maintenance, based on the information about the region requiring the special maintenance on the air conditioner 50 and the information about the region where the air conditioner 50 is installed. Specifically, the remote controller 20 compares the air conditioner position information received from the local controller 10a with the maintenance region information database 23a, and determines whether the air conditioner 50 corresponding to the air conditioner position information is installed in the region requiring the special maintenance. The remote controller 20 then transmits the determination result to the local controller 10a.

Therefore, even in a case where the air conditioner 50 is installed in the region where the metal parts of the air conditioner 50 exposed to the outdoor air tend to be corroded with age and the special maintenance is required, the maintenance worker of the air conditioner 50 can perform timely maintenance of, for example, replacing the metal parts of the air conditioner 50 based on the determination result of the remote controller 20. Therefore, the air conditioner management system 100 makes it possible to perform timely maintenance on the air conditioner 50 that is installed in the region requiring the special maintenance.

### (4-2)

The air conditioner management system 100 of the present embodiment stores the information about the special maintenance on the air conditioner 50. Specifically, the remote controller 20 stores the maintenance information database 23b that stores the information about the special maintenance on the air conditioner 50.

Therefore, in a case where the remote controller 20 determines that the air conditioner 50 is installed in the region requiring the special maintenance, the remote controller 20 can transmit the information about the special maintenance, together with the determination result, to the local controller 10a. As a result, the maintenance worker who manages the air conditioner 50 using the local controller 10a is notified of the information about the special maintenance required for the air conditioner 50. Therefore, with the air conditioner management system 100, the maintenance worker of the air conditioner 50 can appropriately perform the maintenance on the air conditioner 50 in accordance with the notified maintenance information.

### (4-3)

In the case where it is determined that the air conditioner 50 is installed in the region requiring the special maintenance, the air conditioner management system 100 of the present embodiment selects maintenance information suitable for the air conditioner 50, from among the plurality of pieces of maintenance information in accordance with the region where the air conditioner 50 is installed. Specifically, the remote controller 20 selects one piece of the maintenance information 202 based on the air conditioner position information received from the local controller 10a, from among the plurality of pieces of maintenance information 202 stored in the maintenance information database 23b. The remote controller 20 then transmits the contents of the selected maintenance information 202 to the local controller 10a.

Therefore, even in a case where the environment varies depending on the region where the air conditioner 50 is installed, the remote controller 20 can transmit, to the local controller 10a, information about the special maintenance suitable for the environment.

For example, in a case where a plurality of properties 1a, 1b,... , in which the air conditioners 50 are installed, are in a coastal area, the metal parts of the air conditioners 50 are more easily corroded by salt as the properties 1a, 1b,... are closer to the sea. In this case, the maintenance region information database 23a and the maintenance information database 23b are set as follows. That is, a plurality of regions (regions requiring the special maintenance) are set in accordance with the distance from the sea and, in the regions closer to the sea, the years of a replacement cycle for the metal parts of the air conditioner 50 are set shorter. Therefore, the remote controller 20 can notify the maintenance worker of the air conditioner 50 of the appropriate maintenance information 202 selected in accordance with the distance from the sea from among the plurality of pieces of maintenance information 202 stored in the maintenance information database 23b.

Therefore, with the air conditioner management system 100, the maintenance worker of the air conditioner 50 can perform the special maintenance suitable for the region where the air conditioner 50 is installed.

### (4-4)

In the air conditioner management system 100 of the present embodiment, the air conditioner 50 is connected to the remote controller 20 via the communication network 60. The remote controller 20 is a cloud server for remotely managing the air conditioner 50. As illustrated in FIG. 1, the remote controller 20 can remotely manage, via the local controller 10a, the air conditioning systems 40a, 40b,... respectively installed in the plurality of properties 1a, 1b,....

Therefore, the air conditioner management system 100 can efficiently manage the plurality of air conditioners 50. For example, the air conditioner management system 100 can notify the maintenance worker of each air conditioner 50 of information about the special maintenance suitable for the region where the corresponding air conditioner 50 is installed.

### (5) Modifications

Modifications applicable to the embodiment of the present invention will be described.

### (5-1) Modification A

In the air conditioner management system 100 of the embodiment, the storage unit 23 of the remote controller 20 stores the maintenance information database 23b as illustrated in FIG. 7. The maintenance information selection unit 22d of the remote controller 20 selects the maintenance information 202 including information about the special maintenance suitable for the air conditioner 50, based on the region where the air conditioner 50 is installed, from among the plurality of pieces of maintenance information 202 stored in the maintenance information database 23b. In FIG. 7, the years of a replacement cycle for the metal parts of the air conditioner 50 are stored as the maintenance information 202.

Alternatively, in the air conditioner management system 100, the storage unit 23 of the remote controller 20 may store an air conditioner specification information database 23c together with the maintenance information database 23b. Air conditioner specification information about the specifications of the air conditioner 50 is stored in the air conditioner specification information database 23c. In this case, the maintenance information selection unit 22d acquires the information about the special maintenance suitable for the air conditioner 50 based on the air conditioner specification information stored in the air conditioner specification information database 23c, as well as on the region where the air conditioner 50 is installed.

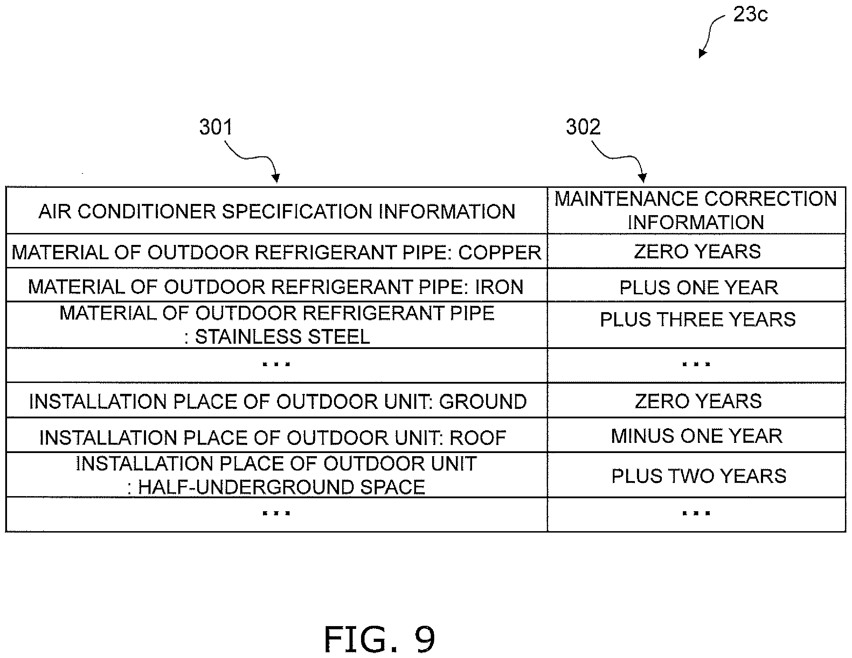

FIG. 9 is an example of the air conditioner specification information database 23c. In the air conditioner specification information database 23c, air conditioner specification information 301 and maintenance correction information 302 are associated with each other. The air conditioner specification information 301 is, for example, information about the specifications of a heat exchanger of the outdoor unit 51 and an outdoor refrigerant pipe. In the case of the heat exchanger of the outdoor unit 51, specific examples of the air conditioner specification information 301 include an installation place, a material, dimensions, and the area of surfaces exposed to the outdoor air, of the heat exchanger. In the case of the outdoor refrigerant pipe, specific examples of the air conditioner specification information 301 include a material, dimensions, and the area of surfaces exposed to the outdoor air, of the refrigerant pipe. In FIG. 9, the air conditioner specification information 301 stores the materials of the outdoor refrigerant pipe and the installation places of the outdoor unit 51 as the exemplary specifications of the air conditioner 50. The maintenance correction information 302 relates to correction of the information about the special maintenance suitable for the air conditioner 50. In FIG. 9, the maintenance correction information 302 stores correction factors for the years of a replacement cycle, the correction factors being based on the years of a replacement cycle for the metal parts of the air conditioner 50. The years of a replacement cycle are also the maintenance information 202 stored in the maintenance information database 23b.

Here, an exemplary correction factor for the years of a replacement cycle will be described with reference to FIGS. 7 and 9. For example, in a case where the air conditioner 50 is installed in the property 1a in the "XX hot spring area", the metal parts of the air conditioner 50 that are exposed to the outdoor air need to be replaced every five years, as illustrated in FIG. 7. In this case, the reference value of the years of a replacement cycle is five years. That is, the reference value of the years of a replacement cycle is stored in the maintenance information 202 of the maintenance information database 23b. Thus, the reference value of the years of a replacement cycle is based only on the region where the air conditioner 50 is installed. In this case, as illustrated in FIG. 9, if the material of the outdoor refrigerant pipe, which is a metal part exposed to the outdoor air, is copper, the correction factor for the years of a replacement cycle stored in the maintenance correction information 302 is zero years. Therefore, based on the material of the outdoor refrigerant pipe as one of the specifications, the years of a replacement cycle for the copper refrigerant pipe of the air conditioner 50 installed in the "XX hot spring area" is the same five years as the reference value. However, in a case where the material of the outdoor refrigerant pipe is iron, the refrigerant pipe is less susceptible to corrosion than copper pipes. In FIG. 9, in the case where the material of the outdoor refrigerant pipe is iron, the correction factor for the years of a replacement cycle stored in the maintenance correction information 302 is plus one year. Therefore, based on the material of the outdoor refrigerant pipe as one of the specifications, the years of a replacement cycle for the iron refrigerant pipe of the air conditioner 50 installed in the "XX hot spring area" is six years, which is obtained by adding one year to five years as the reference value. In a case where the material of the outdoor refrigerant pipe is stainless steel, the refrigerant pipe is less susceptible to corrosion than copper and iron pipes. In FIG. 9, in the case where the material of the outdoor refrigerant pipe is stainless steel, the correction factor for the years of a replacement cycle stored in the maintenance correction information 302 is plus three years. Therefore, based on the material of the outdoor refrigerant pipe as one of the specifications, the years of a replacement cycle for the stainless refrigerant pipe of the air conditioner 50 installed in the "XX hot spring area" is eight years, which is obtained by adding three years to five years as the reference value. In this manner, the maintenance information selection unit 22d selects the reference value of the years of a replacement cycle stored in the maintenance information 202 illustrated in FIG. 7 and the correction factor for the years of a replacement cycle stored in the maintenance correction information 302 illustrated in FIG. 9, and acquires the years of a replacement cycle for the metal parts of the air conditioner 50.

Another exemplary correction factor for the years of a replacement cycle will be described. In a case where the air conditioner 50 is installed in the property 1a in the "ZZ factory area", the heat exchanger of the outdoor unit 51 that is a metal part of the air conditioner 50 exposed to the outdoor air needs to be replaced every six years, as illustrated in FIG. 7. In this case, the reference value of the years of a replacement cycle for the heat exchanger of the outdoor unit 51 is six years. In this case, as illustrated in FIG. 9, if the outdoor unit 51 of the air conditioner 50 is installed on the ground of the property 1a, the correction factor for the years of a replacement cycle stored in the maintenance correction information 302 is zero years. Therefore, based on the installation place of the outdoor unit 51 as one of the specifications, the years of a replacement cycle for the heat exchanger of the outdoor unit 51 installed on the ground, in the air conditioner 50 installed in the "ZZ factory area", is the same six years as the reference value. However, in a case where the outdoor unit 51 is installed on the roof of the property 1a, the heat exchanger of the outdoor unit 51 is easier to deteriorate than the case where the outdoor unit 51 is installed on the ground, because the outdoor unit 51 on the roof is more frequently exposed to chemical components contained in smoke emitted from the factory. In FIG. 9, in the case where the outdoor unit 51 is installed on the roof of the property 1a, the correction factor for the years of a replacement cycle stored in the maintenance correction information 302 is minus one year. Therefore, based on the installation place of the outdoor unit 51 as one of the specifications, the years of a replacement cycle for the heat exchanger of the outdoor unit 51 installed on the roof, in the air conditioner 50 installed in the "ZZ factory area", is five years, which is obtained by subtracting one year from six years as the reference value. In a case where the outdoor unit 51 is installed in a half-underground space, the heat exchanger of the outdoor unit 51 is less likely to deteriorate than the case where the outdoor unit 51 is installed on the ground, because the outdoor unit 51 in the half-underground space is less frequently exposed to chemical components contained in smoke emitted from the factory. In FIG. 9, in the case where the outdoor unit 51 is installed in the half-underground space of the property 1a, the correction factor for the years of a replacement cycle stored in the maintenance correction information 302 is plus two years. Therefore, based on the installation place of the outdoor unit 51 as one of the specifications, the years of a replacement cycle for the heat exchanger of the outdoor unit 51 installed in the half-underground space, in the air conditioner 50 installed in the "ZZ factory area", is eight years, which is obtained by adding two years to six years as the reference value.

In this modification, the local controller 10a has a function of transmitting, to the remote controller 20, information about the specifications of the air conditioner 50 to be managed by the local controller 10a. The remote controller 20 can acquire the years of a replacement cycle for the metal parts of the air conditioner 50 based on the information about the installation place and specifications of the air conditioner 50 received from the local controller 10a and with reference to the maintenance information database 23b and the air conditioner specification information database 23c. Therefore, with the air conditioner management system 100, the maintenance worker of the air conditioner 50 can perform the maintenance suitable for the specifications of the air conditioner 50.

### (5-2) Modification B

In the air conditioner management system 100 of the embodiment, the storage unit 23 of the remote controller 20 stores the maintenance information database 23b as illustrated in FIG. 7. The maintenance information selection unit 22d of the remote controller 20 selects the maintenance information 202 including information about the special maintenance suitable for the air conditioner 50, based on the region where the air conditioner 50 is installed, from among the plurality of pieces of maintenance information 202 stored in the maintenance information database 23b.

Alternatively, in the air conditioner management system 100, the maintenance information selection unit 22d may select the maintenance information 202 including the information about the special maintenance suitable for the air conditioner 50 from among the plurality of pieces of maintenance information 202, further based on at least one of the installation hours and the operation hours of the air conditioner 50.

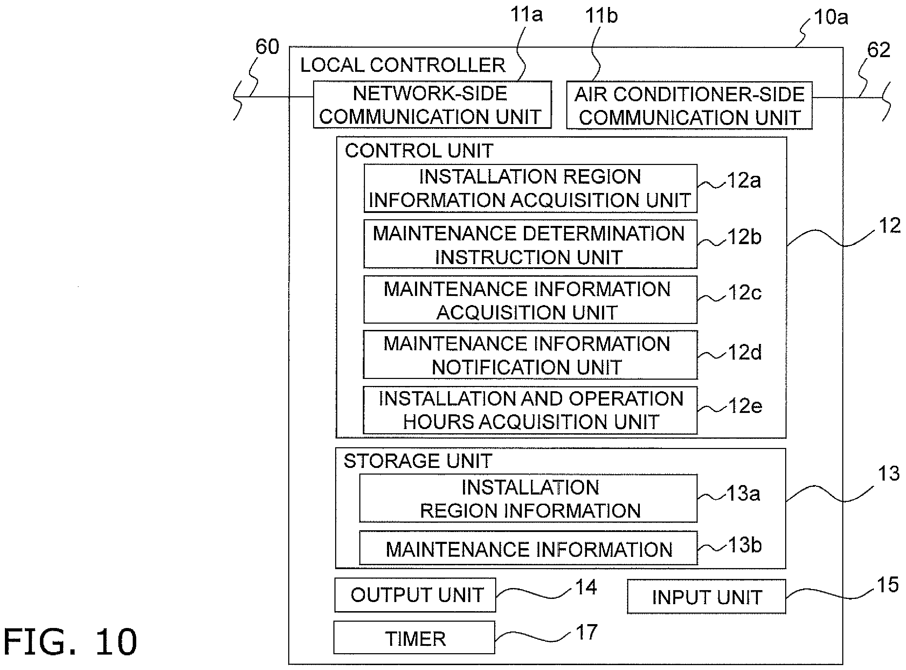

FIG. 10 is a block diagram illustrating a configuration of a local controller 10a of this modification. A timer 17 is attached to the local controller 10a. A control unit 12 further executes an installation and operation hours acquisition unit 12e. The installation and operation hours acquisition unit 12e acquires at least one of the installation hours and the operation hours of the air conditioner 50 using the timer 17. The installation hours of the air conditioner 50 is, for example, an elapsed time from when the air conditioner 50 has been installed. The installation hours of the air conditioner 50 includes the time during which the air conditioner 50 is turned off. The operation hours of the air conditioner 50 is, for example, total operation hours of the air conditioner 50 or total turn-on hours of the air conditioner 50 including thermo-off operation hours.

For example, the installation hours of the air conditioner 50 may be any of days, months, and years that have elapsed since the installation of the air conditioner 50. Similarly, for example, the operation hours of the air conditioner 50 may be any of days, months, and years of operation of the air conditioner 50.

In this modification, the maintenance information selection unit 22d acquires the time until the metal parts of the air conditioner 50 need to be replaced, based on at least one of the installation hours and the operation hours acquired by the installation and operation hours acquisition unit 12e, and on the years of a replacement cycle for the metal parts of the air conditioner 50. In FIG. 7, for example, in the case where the air conditioner 50 is installed in the property 1a in the "XX hot spring area", the metal parts of the air conditioner 50 need to be replaced every five years. In this case, it is assumed that the installation and operation hours acquisition unit 12e has acquired two years as the elapsed time from when the air conditioner 50 has been installed in the property 1a in the "XX hot spring area", that is, two years as the installation hours of the air conditioner 50. In this case, the maintenance information selection unit 22d determines that the metal parts of the air conditioner 50 need to be replaced in three years, based on five years as the years of a replacement cycle for the metal parts of the air conditioner 50 and two years as the installation hours of the air conditioner 50 at present. As a result, the maintenance information selection unit 22d selects information about the special maintenance, indicating that there are three more years until replacement of the metal parts of the air conditioner 50, and transmits the information to the local controller 10a.

In the above example, the maintenance information selection unit 22d selects the information about the special maintenance using the installation hours of the air conditioner 50. Alternatively, the maintenance information selection unit 22d may select the information about the special maintenance using, for example, the operation hours of the air conditioner 50 or the average of the installation hours and the operation hours of the air conditioner 50, instead of using the installation hours of the air conditioner 50. Alternatively, the timer 17 may be attached to the air conditioner 50 or the remote controller 20.

In this modification, the local controller 10a has a function of transmitting, to the remote controller 20, at least one of the installation hours and the operation hours of the air conditioner 50 acquired by the installation and operation hours acquisition unit 12e. The remote controller 20 can acquire an optimum timing for replacing the metal parts of the air conditioner 50 based on at least one of the installation hours and the operation hours of the air conditioner 50 received from the local controller 10a, and transmit the timing to the local controller 10a to notify the maintenance worker of the air conditioner 50 of the timing.

In this modification, for example, even in a case where the installation hours of the plurality of air conditioners 50 installed in one property 1a are different from one another, the remote controller 20 can individually manage the installation hours of each air conditioner 50 and thus notify the maintenance worker of each air conditioner 50 of the optimum timing for replacing the metal parts of the air conditioner 50.

As described above, with the air conditioner management system 100, the maintenance worker of the air conditioner 50 can perform maintenance suitable for at least one of the installation hours and the operation hours of the air conditioner 50.

For example, this modification may be applied to Modification A. In other words, for example, the remote controller 20 may acquire the years of a replacement cycle for the metal parts of the air conditioner 50 further based on the information about the installation place and specifications of the air conditioner 50 received from the local controller 10a and with reference to the maintenance information database 23b and the air conditioner specification information database 23c.

### (5-3) Modification C

In the air conditioner management system 100 of the embodiment, the remote controller 20, which is a cloud server, remotely manages the air conditioner 50 via the local controller 10a. Alternatively, the air conditioner 50 may be managed by the local controller 10a alone.

In this case, the local controller 10a has the function of the remote controller 20. For example, the control unit 12 of the local controller 10a executes programs equivalent to the maintenance necessity determination unit 22c and the maintenance information selection unit 22d of the embodiment, and the storage unit 13 stores databases equivalent to the maintenance region information database 23a and the maintenance information database 23b.

With the air conditioner management system 100 of this modification, the maintenance worker of the air conditioner 50 can perform maintenance on the air conditioner 50 in a local environment without involving an external network, only using the local controller 10a. In this case, for example, the maintenance worker of the air conditioner 50 may perform the maintenance on the air conditioner 50 using a dedicated application for portable terminals such as a smartphone and a tablet. The dedicated application is software for executing the function of the local controller 10a on the portable terminal by, for example, near field communication between the portable terminal and the local controller 10a. For example, the user and the maintenance worker of the air conditioner 50 may perform the maintenance on the air conditioner 50 using the remote control 53 for operating the indoor unit 52.

With the air conditioner management system 100, the maintenance worker of the air conditioner 50 can manage the air conditioner 50 installed in a region where the air conditioner 50 cannot stably be connected to, for example, the remote controller 20 on the cloud via the communication network 60.

In this modification, for example, the printed circuit boards 51p and 52p equivalent to the controller of the air conditioner 50 may have the function of the remote controller 20.

### (5-4) Modification D

In the air conditioner management system 100 of the embodiment, the local controller 10a includes the installation region information acquisition unit 12a. The installation region information acquisition unit 12a acquires the air conditioner position information about the position where the air conditioner 50 is installed, using the GPS 16 attached to the local controller 10a. The maintenance necessity determination unit 22c of the remote controller 20 determines whether the air conditioner 50 requires the special maintenance, based on the air conditioner position information acquired by the installation region information acquisition unit 12a. Alternatively, the local controller 10a may acquire the air conditioner position information about the position where the air conditioner 50 is installed, using another method.

For example, the storage unit 23 of the remote controller 20 may store, in advance, position information about the properties 1a, 1b,... where the air conditioners 50 are installed. The position information about the properties 1a, 1b,... includes, for example, the addresses and the zip codes of the properties 1a, 1b,.... In this case, the remote controller 20 can acquire the air conditioner position information about the positions where the air conditioners 50 are installed in the properties 1a, 1b,... , based on the position information about the properties 1a, 1b,... stored in advance in the storage unit 23.

For example, the local controller 10a may acquire the air conditioner position information about the position where the air conditioner 50 is installed, using a communication device mounted on the local controller 10a. Examples of the communication device mentioned here include a device that can estimate its position using radio waves such as Wi-Fi (registered trademark) and Bluetooth (registered trademark), and a device that can estimate its position using radio waves from base stations for mobile phones. The local controller 10a can transmit information about its position estimated by the communication device, to the remote controller 20 as the air conditioner position information.

For example, the local controller 10a may store the air conditioner position information in the remote control 53 for operating the indoor unit 52. In this case, the user and the maintenance worker of the air conditioner 50 transmit, to the remote control 53, the position information acquired by a GPS mounted on a portable device, such as a smartphone, of the user and the maintenance worker of the air conditioner 50, by means of near field communication between the remote control 53 and the portable device. The local controller 10a can transmit, to the remote controller 20, the position information of the portable device received by the remote control 53 as the air conditioner position information.

### (5-5) Modification E

In the air conditioner management system 100 of the embodiment, the maintenance information transmission unit 22e of the remote controller 20 transmits, to the local controller 10a, the information indicating that the corresponding air conditioner 50 requires the special maintenance, and the information about the special maintenance.

However, for example, the remote controller 20 may further store, as a history, the information transmitted by the maintenance information transmission unit 22e. That is, the remote controller 20 may record the past maintenance history of the air conditioner 50 including the information about the special maintenance on the air conditioner 50. In this case, the maintenance information transmission unit 22e can transmit the past maintenance history, along with the necessity and contents of the special maintenance, to the air conditioner 50, which is the destination of the maintenance information. Therefore, the maintenance worker of the air conditioner 50 can manage the air conditioner 50 with higher reliability based on the past maintenance history of the air conditioner 50.

### (5-6) Modification F

In the air conditioner management system 100 of the embodiment, the storage unit 23 of the remote controller 20 stores the maintenance information database 23b. The maintenance information database 23b stores the maintenance information 202. The maintenance information 202 is, for example, the years of a replacement cycle for the metal parts of the air conditioner 50. The maintenance worker of the air conditioner 50 usually inputs the contents of the maintenance information database 23b in advance, before the air conditioner management system 100 starts operation.

Alternatively, the maintenance worker of the air conditioner 50 may change the maintenance information database 23b as necessary, even after the air conditioner management system 100 starts operation. For example, the maintenance worker of the air conditioner 50 may reset the years of a replacement cycle for the metal parts of the air conditioner 50 depending on the environment in which the air conditioner 50 is installed. For example, in the case where the air conditioner 50 is installed in a coastal area, the years of a replacement cycle for the metal parts of the air conditioner 50 may be appropriately updated depending on the distance from the sea, the strength of sea breeze, and the like. In this manner, the maintenance worker of the air conditioner 50 can update the maintenance information database 23b as necessary, even in a case where the environment in which the air conditioner 50 is installed has to be examined on site, and a case where the environment in which the air conditioner 50 is installed tends to change. Therefore, the maintenance worker can perform maintenance suitable for the region where the air conditioner 50 is installed.

### (5-7) Modification G

In the air conditioner management system 100 of the embodiment, the storage unit 23 of the remote controller 20 stores the maintenance region information database 23a. The maintenance region information database 23a relates to a region requiring the special maintenance on the air conditioner 50.

However, for example, the maintenance region information database 23a may be any database as long as it relates to a region requiring predetermined maintenance on the air conditioner 50. For example, the maintenance region information database 23a may relate to a region requiring normal maintenance on the air conditioner 50. The region requiring normal maintenance is a region requiring no special maintenance on the air conditioner 50. Examples of the region requiring normal maintenance include regions that are none of coastal areas, remote islands, hot spring areas, and factory areas.

In this modification, the maintenance region information database 23a stores, for example, the region requiring normal maintenance on the air conditioner 50, i.e., the region requiring no special maintenance on the air conditioner 50. In other words, the maintenance region information database 23a stores data about regions other than the region requiring the special maintenance on the air conditioner 50. The maintenance necessity determination unit 22c of the remote controller 20 determines, based on the maintenance region information database 23a, whether the air conditioner 50 is installed in the region requiring the special maintenance on the air conditioner 50. Specifically, the maintenance necessity determination unit 22c determines that the air conditioner 50 is installed in the region requiring the special maintenance, in a case where the air conditioner position information about the position of the air conditioner 50, received from the local controller 10a in one property 1a, is not stored in the maintenance region information database 23a.

Alternatively, in this modification, the storage unit 23 of the remote controller 20 may store a plurality of maintenance region information databases 23a. For example, the storage unit 23 may classify maintenance into a plurality of types in accordance with the contents and costs of the maintenance, and store the maintenance region information database 23 for each type of maintenance. As a result, the maintenance worker of the air conditioner 50 can perform appropriate maintenance on the air conditioner 50 in accordance with the type of maintenance required for the air conditioner 50.

### (5-8) Modification H

In the air conditioner management system 100 of the embodiment, the local controller 10a automatically notifies the maintenance worker of the air conditioner 50 of the information about the special maintenance. With the air conditioner management system 100, therefore, the maintenance worker of the air conditioner 50 can appropriately perform maintenance on the air conditioner 50 in accordance with the maintenance information received from the local controller 10a.

Alternatively, the local controller 10a may notify the maintenance worker of the air conditioner 50 of only the determination result as to whether the air conditioner 50 is installed in the region requiring the special maintenance on the air conditioner 50, without notifying the maintenance worker of the air conditioner 50 of the information about the maintenance. Even in this case, the maintenance worker of the air conditioner 50 can perform maintenance on the air conditioner 50 based on the determination result received from the local controller 10a and with reference to, for example, a maintenance manual of the air conditioner 50.

### (5-9) Modification I

In the maintenance information database 23b of the air conditioner management system 100 of the embodiment, the maintenance region information 201 and the maintenance information 202 are associated with each other. The maintenance information 202 is information about the special maintenance on the air conditioner 50 that is installed in the region indicated by the corresponding maintenance region information 201.

In the embodiment, the maintenance information 202 is the years of a replacement cycle for the metal parts of the air conditioner 50. For example, in the case where the data stored in the maintenance information 202 indicates "five years", the metal parts of the air conditioner 50 installed in the region indicated by the maintenance region information 201 corresponding to the maintenance information 202 need to be replaced every five years by the special maintenance.

Alternatively, the maintenance information 202 may not be the years of a replacement cycle for the metal parts of the air conditioner 50. For example, the maintenance information 202 may be information about the optimum material of the metal parts of the air conditioner 50. In this case, the remote controller 20 notifies, via the local controller 10a, the maintenance worker of the air conditioner 50 of the information about the optimum material of the metal parts of the air conditioner 50 as the information about the special maintenance. For example, the maintenance worker replaces an outdoor iron refrigerant pipe, which is one metal part of the air conditioner 50, with a stainless refrigerant pipe, based on the received information.

### (5-10) Modification J

In Modification G, the maintenance region information database 23a stores, for example, the region requiring normal maintenance on the air conditioner 50, i.e., the region requiring no special maintenance on the air conditioner 50. In this case, for example, the storage unit 23 of the remote controller 20 may only store the air conditioner specification information database 23c storing the air conditioner specification information about the specifications of the air conditioner 50, without storing the maintenance information database 23b. In this case, the air conditioner specification information includes the information about the region where the air conditioner 50 is installed. The maintenance information selection unit 22d acquires the information about the special maintenance suitable for the air conditioner 50 based on the air conditioner specification information stored in the air conditioner specification information database 23c.

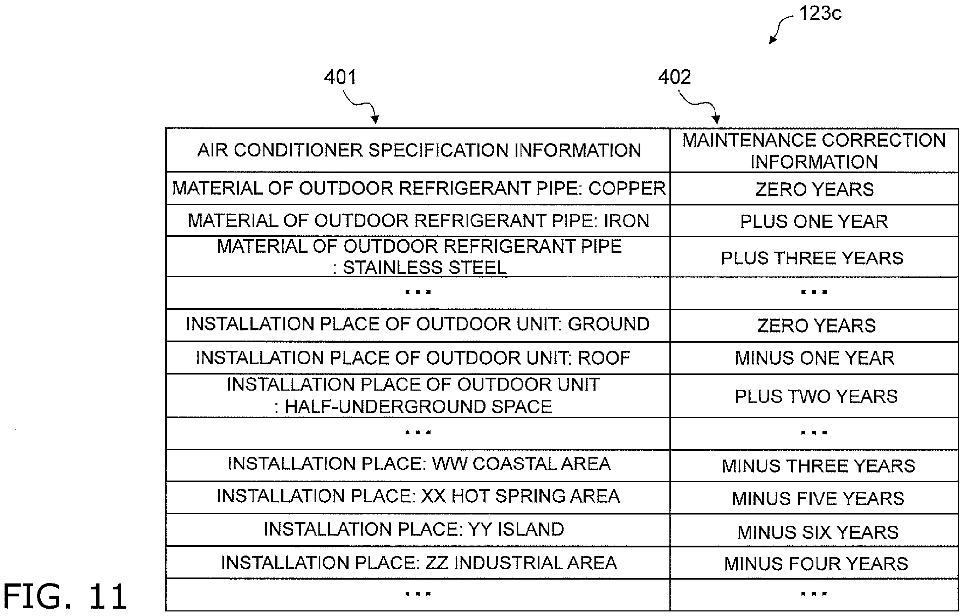

FIG. 11 is an example of an air conditioner specification information database 123c used in this modification. In the air conditioner specification information database 123c, air conditioner specification information 401 and maintenance correction information 402 are associated with each other. The material of an outdoor refrigerant pipe and the installation place of the outdoor unit 51 are described as the air conditioner specification information 401 in FIG. 11, as in Modification A of FIG. 9. In FIG. 11, the "installation region", which is the region where the air conditioner 50 is installed, is further described as the air conditioner specification information 401. The "installation region" exists, for example, for each of the regions requiring the special maintenance on the air conditioner 50. The maintenance correction information 402 relates to correction of the information about the special maintenance suitable for the air conditioner 50. As in Modification A of FIG. 9, the maintenance correction information 402 in FIG. 11 stores a correction factor for the years of a replacement cycle for the metal parts of the air conditioner 50, the correction factor being based on the reference value of the years of a replacement cycle. In this modification, the reference value of the years of a replacement cycle indicates the years of a replacement cycle for the metal parts of the air conditioner 50 installed in the region requiring normal maintenance on the air conditioner 50. The reference value of the years of a replacement cycle is a predetermined value stored in the storage unit 23 in advance. It is assumed below that the reference value of the years of a replacement cycle is ten years.

Next, the correction factor for the years of a replacement cycle based on the region where the air conditioner 50 is installed will be described by way of example. For example, in FIG. 11, in a case where the air conditioner 50 is installed in the property 1a in the "WW coastal area", the correction factor for the years of a replacement cycle stored in the maintenance correction information 402 for this installation region is minus three years. Therefore, based on the region where the air conditioner 50 is installed as one of the specifications, the years of a replacement cycle for the metal parts of the air conditioner 50 installed in the "WW coastal area" is seven years, which is obtained by subtracting three years from ten years as the reference value. In FIG. 11, in a case where the air conditioner 50 is installed in the property 1a in the "YY island", the correction factor for the years of a replacement cycle stored in the maintenance correction information 402 is minus six years. Therefore, based on the region where the air conditioner 50 is installed as one of the specifications, the years of a replacement cycle for the metal parts of the air conditioner 50 installed in the "YY island" is four years, which is obtained by subtracting six years from ten years as the reference value. In this manner, the maintenance information selection unit 22d acquires the years of a replacement cycle for the metal parts of the air conditioner 50 based on the reference value of the years of a replacement cycle stored in the storage unit 23 and the correction factor for the years of a replacement cycle stored in the maintenance correction information 402 illustrated in FIG. 11.

Alternatively, in Modification A and this modification, the maintenance information selection unit 22d may acquire the information about the special maintenance suitable for the air conditioner 50 based on the plurality of types of air conditioner specification information stored in the air conditioner specification information database 23c. For example, in FIG. 11, in the case where the air conditioner 50 is installed in the property 1a in the "WW coastal area", the correction factor for the years of a replacement cycle stored in the maintenance correction information 402 for this installation region is minus three years. In FIG. 11, in a case where the outdoor unit 51 of the air conditioner 50 is installed in a half-underground space of the property 1a, the correction factor for the years of a replacement cycle stored in the maintenance correction information 402 for the installation place of the outdoor unit 51 is plus two years. In this case, based on the specifications indicating the region where the air conditioner 50 is installed and the installation place of the outdoor unit 51 of the air conditioner 50, the years of a replacement cycle for the metal parts of the air conditioner 50 installed in the "WW coastal area" and having the outdoor unit 51 installed in the half-underground space of the property 1a is nine years, which is obtained by subtracting three years from ten years as the reference value and then adding two years to the resultant seven years.

### (5-11) Modification K

In Modification B, the timer 17 for acquiring at least one of the installation hours and the operation hours of the air conditioner 50 is attached to, for example, the local controller 10a. The maintenance information selection unit 22d selects the information about the special maintenance using at least one of the installation hours and the operation hours of the air conditioner 50 acquired by the timer 17.

Alternatively, at least one of the installation hours and the operation hours of the air conditioner 50 may be acquired by a method other than the timer 17, and for example may be acquired by internal control of the air conditioner 50, the local controller 10a, or the remote controller 20. Specifically, for example, the control unit 51b in the outdoor unit 51 of the air conditioner 50, the control unit 52b in the indoor unit 52 of the air conditioner 50, the control unit 12 of the local controller 10a, or the control unit 22 of the remote controller 20 may execute a predetermined program and calculate at least one of the installation hours and the operation hours of the air conditioner 50.

Alternatively, a computer on the cloud may acquire at least one of the installation hours and the operation hours of the air conditioner 50. Specifically, for example, the air conditioner 50, the local controller 10a, or the remote controller 20 may record information about the time when the air conditioner 50 has been installed (e.g. the date when the air conditioner 50 has been installed), and transmit the information to the computer on the cloud as necessary. For example, the control unit 12b of the local controller 10 may record, in the storage unit 13, the information about the time when the air conditioner 50 has been installed, and transmit the information to the computer on the cloud as necessary. In this case, the computer on the cloud can acquire the installation hours of the air conditioner 50 based on information about the current time and the information about the time when the air conditioner 50 has been installed, and transmit the installation hours to, for example, the local controller 10a.

Alternatively, the air conditioner 50, the local controller 10a, or the remote controller 20 may record information about the operation start time and the operation end time of the air conditioner 50, and transmit the information to the computer on the cloud as necessary. For example, the control unit 12b of the local controller 10 may record, in the storage unit 13, the information about the operation start time and the operation end time of the air conditioner 50, and transmit the information to the computer on the cloud as necessary. In this case, the computer on the cloud can acquire the operation hours of the air conditioner 50 based on the information about the operation start time and the operation end time of the air conditioner 50, and transmit the operation hours to, for example, the local controller 10a.

Alternatively, the information about the time when the air conditioner 50 has been installed and the information about the operation start time and the operation end time of the air conditioner 50 may be recorded in, for example, a database of the computer on the cloud. In this case, for example, the computer on the cloud can receive and store daily report data from the remote controller 20 and, as necessary, acquire the operation hours of the air conditioner 50 based on the daily report data, or acquire the installation hours of the air conditioner 50 based on the daily report data and the information about the current time. In this case, the air conditioner 50, the local controller 10a, or the remote controller 20 receives necessary information from the computer on the cloud, and acquires at least one of the installation hours and the operation hours of the air conditioner 50.

### INDUSTRIAL APPLICABILITY

The air conditioner management system according to the present invention enables timely maintenance on an air conditioner installed in a region requiring predetermined maintenance.

### REFERENCE SIGNS LIST

- 12a: Installation region information acquisition unit (first acquisition unit)
- 12d: Maintenance information notification unit (notification unit)
- 12e: Installation and operation hours acquisition unit (second acquisition unit)
- 20: Remote controller (air conditioner management apparatus)
- 22c: Maintenance necessity determination unit (determination unit)
- 22d: Maintenance information selection unit (selection unit)
- 22e: Maintenance information transmission unit (presentation unit)
- 23a: Maintenance region information database (first storage unit)
- 23b: Maintenance information database (second storage unit)
- 23c: Air conditioner specification information database (third storage unit)
- 50: Air conditioner
- 60: Communication network (network)
- 100: Air conditioner management system

### CITATION LIST

### PATENT LITERATURE

[Patent Literature 1] JP 2013-83437 A

## Claims

1. An air conditioner management system (100) comprising
a first acquisition unit (12a) configured to acquire air conditioner installation region information about a region where an air conditioner (50) is installed, and further comprising
a first storage unit (23a) that stores maintenance region information about a predetermined region where, if the air conditioner is installed therein, the air conditioner requires predetermined periodic replacement of metal parts thereof;
a second storage unit (23b) that stores maintenance information about the predetermined periodic replacement;
a determination unit (22c) configured to determine whether the air conditioner is installed in the predetermined region, based on the maintenance region information stored in the first storage unit and the air conditioner installation region information acquired by the first acquisition unit; and
a presentation unit (22e) configured to, when the air conditioner is installed in the predetermined region, present the maintenance information stored in the second storage unit to a maintenance worker of the air conditioner based on a determination result of the determination unit.

2. The air conditioner management system according to claim 1, wherein
the maintenance information includes years of a replacement cycle for the metal parts

3. The air conditioner management system according to claim 1 or 2, further comprising a selection unit (22d),
wherein the second storage unit stores a plurality of pieces of the maintenance information,
the selection unit is configured to select at least one piece of the maintenance information from among the plurality of pieces of maintenance information stored in the second storage unit, based on the air conditioner installation region information acquired by the first acquisition unit, and
the presentation unit is configured to present the maintenance information selected by the selection unit.

4. The air conditioner management system according to claim 3, further comprising a third storage unit (23c) that stores air conditioner specification information about specifications of the air conditioner,
wherein the selection unit is configured to select the maintenance information further based on the air conditioner specification information stored in the third storage unit.

5. The air conditioner management system according to claim 3 or 4, further comprising a second acquisition unit (12e) configured to acquire at least one of installation hours and operation hours of the air conditioner,
wherein the selection unit is configured to select the maintenance information further based on at least one of the installation hours and the operation hours acquired by the second acquisition unit.

6. The air conditioner management system according to any one of claims 1 to 5,
wherein the air conditioner includes a notification unit (12d) configured to provide notification of the maintenance information, and
the presentation unit is configured to transmit the maintenance information to the notification unit.

7. The air conditioner management system according to any one of claims 1 to 6, further comprising the air conditioner and an air conditioner management apparatus (20),
wherein the air conditioner is connected to the air conditioner management apparatus via a network (60), and
the air conditioner management apparatus includes at least one of the first storage unit, the first acquisition unit, and the determination unit.

8. The air conditioner management system according to any one of claims 1 to 6, further comprising the air conditioner,
wherein the air conditioner includes the first storage unit, the first acquisition unit, and the determination unit.

## Patentansprüche

1. Klimaanlagen-Verwaltungssystem (100), das aufweist:
eine erste Erfassungseinheit (12a), die konfiguriert ist, Informationen über eine Klimaanlagen-Installationsregion über eine Region zu erfassen, in der eine Klimaanlage (50) installiert ist,
und das ferner aufweist
eine erste Speichereinheit (23a), die
Wartungsregionsinformationen über eine vorbestimmte Region speichert, in der, wenn die Klimaanlage darin installiert ist, die Klimaanlage einen vorbestimmten periodischen Austausch ihrer Metallteile benötigt;
eine zweite Speichereinheit (23b), die
Wartungsinformationen über den vorbestimmten periodischen Austausch speichert;
eine Feststellungseinheit (22c), die konfiguriert ist,
beruhend auf den in der ersten Speichereinheit gespeicherten Wartungsregionsinformationen und den durch die erste Erfassungseinheit erfassten Informationen über die Klimaanlagen-Installationsregion festzustellen, ob die Klimaanlage in der vorbestimmten Region installiert ist; und
eine Präsentationseinheit (22e), die konfiguriert ist, wenn die Klimaanlage in der vorbestimmten Region installiert ist, die in der zweiten Speichereinheit gespeicherten Wartungsinformationen beruhend auf einem Feststellungsergebnis der Feststellungseinheit einem Wartungsarbeiter der Klimaanlage zu präsentieren.

2. Klimaanlagen-Verwaltungssystem nach Anspruch 1, wobei die Wartungsinformationen Jahre eines Austauschzyklus für die Metallteile aufweisen.

3. Klimaanlagen-Verwaltungssystem nach Anspruch 1 oder 2, das ferner eine Auswahleinheit (22d) aufweist,
wobei die zweite Speichereinheit mehrere Wartungsinformationen speichert,
die Auswahleinheit konfiguriert ist, mindestens eine Wartungsinformation aus den in der zweiten Speichereinheit gespeicherten mehreren Wartungsinformationen beruhend auf den durch die erste Erfassungseinheit erfassten Informationen über die Klimaanlagen-Installationsregion auszuwählen, und
die Präsentationseinheit konfiguriert ist, die durch die Auswahleinheit ausgewählten Wartungsinformationen zu präsentieren.

4. Klimaanlagen-Verwaltungssystem nach Anspruch 3, das ferner eine dritte Speichereinheit (23c) aufweist, die Klimaanlagen-Spezifikationsinformationen über Spezifikationen der Klimaanlage speichert,
wobei die Auswahleinheit konfiguriert ist, die Wartungsinformationen ferner beruhend auf den in der dritten Speichereinheit gespeicherten Klimaanlagen-Spezifikationsinformationen auszuwählen.

5. Klimaanlagen-Verwaltungssystem nach Anspruch 3 oder 4, das ferner eine zweite Erfassungseinheit (12e) aufweist, die konfiguriert ist, die Installationsstunden und/oder die Betriebsstunden der Klimaanlage zu erfassen,
wobei die Auswahleinheit konfiguriert ist, die Wartungsinformationen ferner beruhend auf den durch die zweite Erfassungseinheit erfassten Installationsstunden und/oder Betriebsstunden auszuwählen.

6. Klimaanlagen-Verwaltungssystem nach einem der Ansprüche 1 bis 5, wobei die Klimaanlage eine Benachrichtigungseinheit (12d) aufweist, die konfiguriert ist, eine Benachrichtigung der Wartungsinformationen bereitzustellen, und
die Präsentationseinheit konfiguriert ist, die Wartungsinformationen zur Benachrichtigungseinheit zu übertragen.

7. Klimaanlagen-Verwaltungssystem nach einem der Ansprüche 1 bis 6, das ferner die Klimaanlage und eine Klimaanlagen-Verwaltungsvorrichtung (20) aufweist,
wobei die Klimaanlage über ein Netzwerk (60) mit der Klimaanlagen-Verwaltungsvorrichtung verbunden ist, und
die Klimaanlagen-Verwaltungsvorrichtung mindestens eine der ersten Speichereinheit, der ersten Erfassungseinheit und der Feststellungseinheit aufweist.

8. Klimaanlagen-Verwaltungssystem nach einem der Ansprüche 1 bis 6, das ferner die Klimaanlage aufweist,
wobei die Klimaanlage die erste Speichereinheit, die erste Erfassungseinheit und die Feststellungseinheit aufweist.

## Revendications

1. Système de gestion de climatiseur (100) comprenant une première unité d'acquisition (12a) prévue pour acquérir des informations de zone d'installation de climatiseur sur une zone où un climatiseur (50) est installé,
et comprenant en outre
une première unité de mémorisation (23a) stockant des informations de zone de maintenance sur une zone définie où, si le climatiseur y est installé, ledit climatiseur nécessite le remplacement périodique défini de pièces métalliques ;
une deuxième unité de mémorisation (23b) stockant des informations de maintenance sur le remplacement périodique défini ;
une unité de détermination (22c) prévue pour déterminer si le climatiseur est installé dans la zone définie, sur la base des informations de zone de maintenance stockées dans la première unité de mémorisation et des informations de zone d'installation de climatiseur acquises par la première unité d'acquisition ; et
une unité de présentation (22e) prévue pour, lorsque le climatiseur est installé dans la zone définie, présenter les informations de maintenance stockées dans la deuxième unité de mémorisation à un agent de maintenance du climatiseur sur la base d'un résultat de détermination de l'unité de détermination.

2. Système de gestion de climatiseur selon la revendication 1, où
les informations de maintenance comprennent les années d'un cycle de remplacement pour pièces métalliques.

3. Système de gestion de climatiseur selon la revendication 1 ou la revendication 2, comprenant en outre une unité de sélection (22d),
où la deuxième unité de mémorisation stocke une pluralité d'éléments des informations de maintenance,
l'unité de sélection est prévue pour sélectionner au moins un élément des informations de maintenance dans la pluralité d'éléments d'informations de maintenance stockés dans la deuxième unité de mémorisation, sur la base des informations de zone d'installation de climatiseur acquises par la première unité d'acquisition, et
l'unité de présentation est prévue pour présenter les informations de maintenance sélectionnées par l'unité de sélection.

4. Système de gestion de climatiseur selon la revendication 3, comprenant en outre une troisième unité de mémorisation (23c) stockant des informations de spécification de climatiseur sur des spécifications du climatiseur,
où l'unité de sélection est prévue pour sélectionner en outre les informations de maintenance sur la base des informations de spécification de climatiseur stockées dans la troisième unité de mémorisation.

5. Système de gestion de climatiseur selon la revendication 3 ou la revendication 4, comprenant en outre une deuxième unité d'acquisition (12e) prévue pour acquérir des heures d'installation et/ou des heures de fonctionnement du climatiseur,
où l'unité de sélection est prévue en outre pour sélectionner les informations de maintenance sur la base des heures d'installation et/ou des heures de fonctionnement acquises par la deuxième unité d'acquisition.

6. Système de gestion de climatiseur selon l'une des revendications 1 à 5, où le climatiseur comprend une unité de notification (12d) prévue pour notifier des informations de maintenance, et
l'unité de présentation est prévue pour transmettre les informations de maintenance à l'unité de notification.

7. Système de gestion de climatiseur selon l'une des revendications 1 à 6, comprenant en outre le climatiseur et un dispositif de gestion de climatiseur (20),
le climatiseur étant relié au dispositif de gestion de climatiseur par l'intermédiaire d'un réseau (60), et
le dispositif de gestion de climatiseur comprenant au moins une unité entre la première unité de mémorisation, la première unité d'acquisition et l'unité de détermination.

8. Système de gestion de climatiseur selon l'une des revendications 1 à 6, comprenant en outre le climatiseur, ledit climatiseur comportant la première unité de mémorisation, la première unité d'acquisition et l'unité de détermination.
